# EUROPÄISCHE PATENTANMELDUNG

(11) **EP 3 078 895 A1**
(43) Veröffentlichungstag der Anmeldung: **12.10.2016**
(21) Anmeldenummer: 16166873.6
(22) Anmeldetag: 25.04.2016
(51) Int. Cl.: F16L 55/18, B29C 35/10, B29C 63/00, B29C 63/34, E03F 3/06, G21K 5/04

(54) **VORRICHTUNG ZUM AUSHÄRTEN EINER BESCHICHTUNG AUF EINER INNENWANDUNG EINES KANALS MIT OVALEM QUERSCHNITT**

(30) Priorität: 07.04.2015 DE 102015107129
(71) Anmelder: Heraeus Noblelight GmbH, 63450 Hanau (DE)
(72) Erfinder: PRETSCH, Ralf, 63450 Hanau (DE); RÜTH, Christian, 63776 Mömbris (DE)
(74) Vertreter: Heraeus IP

(57) **Zusammenfassung**

Bekannte Vorrichtungen (30) zum Aushärten einer Beschichtung auf einer Innenwandung eines Kanals (10) mit ovalem Querschnitt, der einen ersten gekrümmten Abschnitt (11), einen dem ersten gekrümmten Abschnitt (11) gegenüberliegenden, zweiten Abschnitt (12) und zwei Seitenabschnitte (13a; 13b) umfasst, weisen mindestens zwei UV-Lampen (34a; 34b), sowie eine Führungseinheit (31). Um hiervon ausgehend eine Vorrichtung anzugeben, die einerseits universell einsetzbar ist und andererseits eine möglichst gleichmäßige Bestrahlung der Innenwandung mit ultravioletter Strahlung ermöglicht, wird erfindungsgemäß vorgeschlagen, dass den UV-Lampen (34a; 34b) jeweils ein Reflektor (35a; 35b) zur Führung des von der UV-Lampe (24a) emittierten Lichts auf den jeweiligen gekrümmten Abschnitt (11) zugeordnet ist, wobei sich der erste Reflektor (35a) und der zweite Reflektor (35b) in ihrem Reflektorwinkel und/oder in ihrem Reflexionsgrad unterscheiden.

## Beschreibung

Die vorliegende Erfindung betrifft eine Vorrichtung zum Aushärten einer Beschichtung auf einer Innenwandung eines Kanals mit ovalem Querschnitt, der einen ersten gekrümmten Abschnitt, einen dem ersten gekrümmten Abschnitt gegenüberliegen zweiten Abschnitt und zwei Seitenabschnitte umfasst. Die Vorrichtung weist mindestens zwei UV-Lampen, nämlich eine erste UV-Lampe, und eine zweite UV-Lampe, sowie eine Führungseinheit mit einer Aufnahme für jede der UV-Lampen auf, wobei die Führungseinheit die Position der UV-Lampen in Bezug auf den ovalen Querschnitt des Kanals festlegt.

Bei bekannten Sanierungsverfahren für Kanalsysteme, wird die Innenwandung des zu sanierenden Kanals mit einer Beschichtung versehen, häufig werden hierzu Faserverbundwerkstoffe in den Kanal eingebracht. Faserverbundwerkstoffe in diesem Sinne sind beispielsweise textile Materialien, die mit einem UV-härtbaren Material getränkt sind, beispielsweise mit einem Harz. Die Form derartiger Faserverbundstoffe ist häufig an die Form der Innenwandung des Kanals angepasst; sie werden auch als Liner oder Kunststoffliner bezeichnet.

Eine solche in das Kanalsystem eingebrachte Beschichtung muss nach dem Einbringen in das Kanalsystem ausgehärtet werden. Dies kann beispielsweise thermisch durch Einbringen von heißem Wasser oder von Wasserdampf oder optisch unter Verwendung von ultravioletter Strahlung erfolgen. Die erfindungsgemäße Vorrichtung betrifft das optische Aushärten einer Beschichtung mittels ultravioletter Strahlung.

### Stand der Technik

Bekannte Vorrichtungen, die zur Bestrahlung von Kanal-Beschichtungen eingesetzt werden, umfassen zwei oder mehrere UV-Lampen zur Erzeugung ultravioletter Strahlung, sowie eine Führungseinheit zur Führung der UV-Lampen durch den zu bestrahlenden Kanal. Die Führungseinheit ist derart ausgestaltet, dass sie durch den Kanal gezogen oder geschoben werden kann. In der Regel ist die Führungseinheit hierzu mit Rollen versehen, so dass eine einfache Bewegung der Führungseinheit relativ zum Kanal ermöglicht wird. Die Führungseinheit weist darüber hinaus mehrere Aufnahmen für die UV-Lampen auf.

Um eine Sanierung der Kanäle mit hoher Qualität zu erzielen, ist es notwendig, die Beschichtung beziehungsweise den Kunststoffliner möglichst homogen zu bestrahlen. Hierfür ist die Einhaltung möglichst gleichmäßiger Abstände der UV-Lampen zur Oberfläche notwendig.

Viele bekannte Führungseinheiten sind allerdings regelmäßig für eine vorbestimmte Kanalform ausgelegt, nämlich solche mit kreisrundem Querschnitt. Sie sind darüber hinaus regelmäßig für einen bestimmten Kanal-Innendurchmesser ausgelegt.

Insbesondere bei der Bestrahlung von Kanalformen mit ovalem Querschnitt sind diese Führungseinheiten nur schwer zentrierbar. Darüber steht die Form der Führungseinheit beziehungsweise die Kanalform einer gleichmäßigen Bestrahlung der Innenwandung entgegen.

Aus der DE 10 2009 025 829 A1 ist eine Vorrichtung zur Rohr- und Kanalsanierung bekannt, die universell bei einer Vielzahl von unterschiedlichen Rohr-/ Kanaldurchmessern und auch bei unterschiedlichen Rohr-/Kanalformen einsetzbar ist. Hierzu weist die Vorrichtung Aufnahmen für Arme auf, in die unterschiedlich dimensionierte Arme und Rollen einsetzbar sind.

Durch die unterschiedlich dimensionierten Arme und Rollen wird die Ausrichtung der Führungseinheit in Bezug auf den Querschnitt des zu bestrahlenden Kanals festgelegt. Gleichzeitig tragen die Arme und Rollen zu einer Zentrierung der Führungseinheit im Kanal bei.

Zwar geht eine Zentrierung der Führungseinheit mit einer Verringerung der Abstandsunterschiede der UV-Lampen zur Innenwandung des Kanals und einer gleichmäßigeren Bestrahlung einher. Allerdings können durch eine Zentrierung die Abstandsunterschiede nur verbessert, aber nicht vollständig optimiert werden. Bedingt durch die eiförmige, ovale Kanalform unterscheiden sich auch nach einer Zentrierung die kürzesten Abstände der UV-Lampen zu der von ihnen zu bestrahlenden Oberfläche. Dies gilt insbesondere im Hinblick auf die Abstände zu dem ersten und dem zweiten Abschnitt des ovalen Querschnitts und die Abstände zu den Seitenabschnitten.

### Technische Aufgabe

Der Erfindung liegt daher die Aufgabe zugrunde, eine Vorrichtung zum Aushärten einer Beschichtung auf einer Innenwandung eines Kanals mit ovalem Querschnitt anzugeben, die einerseits universell einsetzbar ist und andererseits eine möglichst gleichmäßige Bestrahlung der Innenwandung mit ultravioletter Strahlung ermöglicht.

### Allgemeine Beschreibung der Erfindung

Diese Aufgabe wird ausgehend von einer Vorrichtung der eingangs genannten Gattung erfindungsgemäß dadurch gelöst, dass der ersten UV-Lampe ein erster Reflektor zur Führung des von der ersten UV-Lampe emittierten Lichts auf den ersten gekrümmten Abschnitt zugeordnet ist, und der zweiten UV-Lampe ein zweiter Reflektor zur Führung des von der zweiten UV-Lampe emittieren Lichts auf den zweiten gekrümmten Abschnitt zugeordnet ist, wobei sich der erste Reflektor und der zweite Reflektor in ihrem Reflektorwinkel und/oder in ihrem Reflexionsgrad unterscheiden.

Bei der Aushärtung von Beschichtungen in Rohren und Kanälen ist es grundsätzlich erstrebenswert, die auszuhärtende Beschichtung möglichst gleichmäßig zu bestrahlen. Eine gleichmäßige Bestrahlung trägt zur Vermeidung von Bestrahlungsschäden und einer unvollständigen Aushärtung und damit zu einer hohen Lebensdauer der Beschichtung bei.

Die Homogenität der Bestrahlung wird durch den konstruktiven Aufbau der Führungseinheit beeinflusst. Da sich die zu bestrahlenden Rohre und Kanäle in der Praxis regelmäßig unterscheiden, beispielsweise hinsichtlich ihres Innendurchmessers oder ihrer Querschnittsform, müsste für jede Rohr-/Kanalform eine optimierte, separate Führungseinheit vorrätig gehalten werden. Dies ist aufwendig und kostenintensiv.

Es besteht daher Bedarf an einer universellen Führungseinheit, die einfach umgerüstet und an unterschiedliche Rohrformen angepasst werden kann. Zwar sind im Stand der Technik Lösungen für dieses Problem bekannt, bei denen die Führungseinheit bezogen auf das zu bestrahlende Rohr/den zu bestrahlenden Kanal zentriert ist und die bei kreisrunden Rohr-/Kanalquerschnitten eine hinreichend homogene Bestrahlung ermöglichen können. Besondere Probleme hinsichtlich der Homogenität der Bestrahlung ergeben sich allerdings dann, wenn die Rohr-/ Kanalform von einer kreisrunden Form abweicht, insbesondere bei ovalen Querschnittsprofilen, wie beispielsweise bei Rohren/Kanälen mit Eiprofil, Torbogenprofil oder Hufeisenprofil. Die erfindungsgemäße Vorrichtung betrifft daher Vorrichtungen, die in Rohren und Kanälen mit ovalem Querschnittsprofil, insbesondere mit einem rechteckigem, quadratischem oder polygonalem Querschnittsprofil, universell einsetzbar sind. Es versteht sich, dass diese Vorrichtung sowohl für Rohre als auch für Kanäle mit ovaler Querschnittsform ausgelegt ist. Sofern nachfolgend zur sprachlichen Vereinfachung nur von Kanälen gesprochen wird, sei hiermit klargestellt, dass der Gegenstand der Erfindung nicht auf einen Einsatz der Vorrichtung in Kanälen beschränkt ist, sondern auch in Rohren mit einer ovalen Querschnittsform einsetzbar ist.

Zwar kann die Führungseinheit auch bei ovalen Querschnittformen in Bezug auf den Querschnitt zentriert werden. Da die Führungseinheit selbst universell einsetzbar sein soll, also auch für kreisrunde Querschnittsformen geeignet sein muss, ist beim Einsatz einer solchen Führungseinheit in einem Kanal mit ovalem Querschnitt regelmäßig kein einheitlicher kürzester Abstand der UV-Lampen zur der zu bestrahlenden Oberfläche einstellbar. Spiegelsymmetrische, ovale Querschnittsformen weisen eine Abmessung in Längsrichtung und eine demgegenüber kürzere Erstreckung in Querrichtung auf. In der Regel ist der Abstand einer zur Bestrahlung des Querschnitts in Querrichtung vorgesehenen UV-Lampe zur Innenwandung geringer als der einer UV-Lampe, die zur Bestrahlung des Querschnitts in Längsrichtung vorgesehen ist. Diese Unterschiede hinsichtlich der kürzesten Abstände der UV-Lampen tragen zu einer ungleichmäßigen Bestrahlung der Innenwandung des Kanals bei.

Gemäß der Erfindung werden daher zwei Modifikationen des Standes der Technik vorgeschlagen, von denen eine die Zuordnung von mindestens zwei UV-Lampen jeweils zu einem bestimmten Abschnitt des zu bestrahlenden Querschnitts des Kanals und die andere das Vorsehen von mindestens zwei unterschiedlichen Reflektoren zur gerichteten Führung der von mindestens zwei UV-Lampen emittierten Strahlung auf die zugeordneten Kanalquerschnitts-Abschnitte betrifft.

Die Anzahl der UV-Lampen ist an die ovale Querschnittsform des zu bestrahlenden Kanals angepasst. Der Querschnitt derartiger Kanäle ist regelmäßig in vier funktionale Abschnitte unterteilbar, nämlich einen ersten gekrümmten Abschnitt, einen dem ersten gekrümmten Abschnitt gegenüberliegenden, zweiten Abschnitt und zwei Seitenabschnitte.

Die Querschnittsform weist häufig eine Symmetrieachse auf, so dass die beiden Seitenabschnitte regelmäßig identisch ausgebildet sind, und in gleicher Weise bestrahlt werden können. Vorzugsweise umfasst die erfindungsgemäße Vorrichtung daher mindestens drei UV-Lampen, nämlich eine erste UV-Lampe, die im Wesentlichen zur Bestrahlung des ersten Abschnitts ausgelegt ist, eine zweite UV-Lampe, die im Wesentlichen zur Bestrahlung des zweiten Abschnitts ausgelegt ist, und eine dritte UV-Lampe zur Bestrahlung der beiden Seitenabschnitte.

Vorzugsweise sind die erste, die zweite und - sofern vorhanden - die dritte UV-Lampe baugleich. Der Begriff baugleich bezieht sich auf die Grundform der jeweiligen Lampen, also auf die Länge des Lampenkolbens, den Durchmesser des Lampenkolbens, sowie ihre elektrischen Betriebsparameter. Der Einsatz baugleicher Lampen ermöglicht eine besonders einfache, da einheitliche, elektrische Kontaktierung der UV-Lampen. Insbesondere können Sockelabstände, die Art der Sockelung, und die Auslegung elektrische Versorgungseinheit unabhängig von der Position der Lampe in Bezug auf die Führungseinheit gleich ausgestaltet sein. Hierdurch werden eine einfache Konstruktion, sowie eine einfache Ansteuerung der Lampen und damit eine kostengünstige Vorrichtung ermöglicht.

Um beim Einsatz baugleicher UV-Lampen dennoch eine gleichmäßige Bestrahlungsleistung zu erzielen, ist erfindungsgemäß vorgesehen, dass mindestens zwei der UV-Lampen, nämlich die erste und die zweite UV-Lampe jeweils mit einem Reflektor versehen sind. Die Zuordnung eines Reflektors betrifft die erste und die zweite UV-Lampe, da der kürzeste Abstand dieser Lampen zur Innenwandung häufig unterschiedlich groß ist. Ist eine dritte UV-Lampe vorgesehen, ist der kürzeste Abstand dieser Lampen regelmäßig größer ist als der kürzeste Abstand der dritten UV-Lampe zur Innenwandung. Sowohl der erste Abschnitt als auch der zweite Abschnitt des Kanals müssen, um eine gleichmäßige Bestrahlung zu gewährleisten, mit einem größeren Anteil der von den jeweiligen UV-Lampen emittierten Strahlung bestrahlt werden. Bei einer vorteilhaften Ausgestaltung kann aber auch der dritten UV-Lampe ein Reflektor zugeordnet sein.

Die Reflektoren tragen dazu bei, dass die von der ersten und der zweiten UV-Lampe emittierte Strahlung in Richtung auf den ersten beziehungsweise den zweiten Abschnitt des Kanals geführt wird. Somit steht ein großer Anteil der von dem ersten beziehungsweise der zweiten UV-Lampe emittierten Strahlung unmittelbar für eine Bestrahlung des jeweils zugeordneten Abschnitts des Kanals zur Verfügung. Der erste und der zweite Reflektor sind derart ausgelegt, dass die von ihnen emittierte Strahlung eine kleinere Fläche bestrahlt. Hierdurch wird die Bestrahlungsleistung erhöht.

Bedingt durch die ovale Querschnittsform des Kanals ergeben sich unterschiedliche kürzeste Abstände der ersten und der zweiten UV-Lampe zur Innenwandung des Kanals. Erfindungsgemäß ist daher vorgesehen, dass sich der erste Reflektor und der zweite Reflektor unterscheiden. Mögliche Unterschiede können beispielsweise der Reflektorwinkel und/oder der Reflexionsgrad sein.

Ein Reflektor erzeugt ein beleuchtetes Feld. Der Reflektorwinkel - auch Ausstrahlungswinkel genannt - gibt den Öffnungswinkel des emittierten Lichtbündels an, also den Winkel, in dem die Lampen-Einheit aus Reflektor und zugehöriger UV-Lampe Licht abgibt. Je kleiner der Reflektorwinkel ist, desto größer ist die Bündelung des Lichts.

Der Reflexionsgrad beschreibt das Verhältnis der Leistung des vom Reflektor reflektierten Lichts zur Leistung des auf den Reflektor einfallenden Lichts. Ein hoher Reflexionsgrad geht mit geringen Strahlungsverlusten einher.

Dadurch, dass sich die beiden Reflektoren unterscheiden wird eine optimale Anpassung der Bestrahlungsleistung an die geometrische Querschnittsform des Kanals ermöglicht.

Es hat sich bewährt, wenn der Reflektor ein separater Reflektor ist. Vorzugsweise weist die Führungseinheit neben Aufnahmen für die UV-Lampen eine Aufnahme für einen separaten Reflektor auf. Hierdurch wird eine einfache und schnelle Anpassung der Reflektoren an die Querschnittsform des zu bestrahlenden Kanals ermöglicht.

Bei einer bevorzugten Ausgestaltung der erfindungsgemäßen Vorrichtung ist vorgesehen, dass die dritte UV-Lampe zur Bestrahlung eines der Seitenabschnitte ausgelegt ist, und dass die Vorrichtung eine vierte UV-Lampe umfasst, die zur Bestrahlung des anderen Seitenabschnitts ausgelegt ist.

Im einfachsten Fall umfasst die Vorrichtung im Querschnitt gesehen eine einzige dritte UV-Lampe. Um eine gleichmäßige Bestrahlung der Innenwand zu ermöglichen setzt dies voraus, dass der Mittelpunkt der dritten UV-Lampe bezogen auf den Kanal zentriert ist. Auf diese Weise wird eine einfache und kompakte Bestrahlungsvorrichtung erhalten. In diesem Zusammenhang hat es sich bewährt, wenn die dritte UV-Lampe mit zwei Zusatzreflektoren versehen ist, von denen einer der ersten UV-Lampe zugewandten Seite und der andere einer der zweiten UV-Lampe zugewandten Seite der dritten UV-Lampe zugeordnet ist. Durch eine solche Zusatzreflektor-Anordnung wird eine Emission von Strahlung durch die dritte UV-Lampe in Richtung der ersten und zweiten UV-Lampe verringert. Hierdurch wird eine hohe Strahlungseffizienz der Vorrichtung ermöglicht.

Andererseits hat es sich als vorteilhaft erwiesen, wenn jedem der beiden Seitenabschnitte jeweils eine UV-Lampe zugeordnet ist. Hierdurch ist jeder UV-Lampe ein Abschnitt des Kanals zugeordnet, wodurch eine einfache Anpassung der Vorrichtung an die Querschnittsform des Kanals ermöglicht wird. Darüber hinaus wird mit einer solchen Vorrichtung eine einfache, homogene Bestrahlung unsymmetrischer Querschnittsformen ermöglicht.

Es hat sich als vorteilhaft erwiesen, wenn der erste Reflektor und/oder der zweite Reflektor derart ausgelegt ist, dass er ein ovales Beleuchtungsfeld erzeugt.

Ein ovales Beleuchtungsfeld weist eine Feld-Längsachse und eine FeldQuerachse auf. Es weist eine hohe Bestrahlungsleistung entlang der Längsachse auf. Eine hohe Bestrahlungseffizienz wird erreicht, wenn die Feld-Längsachse parallel zu einer Längsachse des Kanals verläuft. Hierdurch wird ermöglicht, dass sich die Beleuchtungsfelder benachbarter, in der Längsachse des Kanals hintereinander angeordneter erster beziehungsweise zweiter UV-Lampen unter Ausbildung eines homogenen Gesamtbestrahlungsfelds überlappen.

Es hat sich bewährt, wenn die erste UV-Lampe ein erstes Beleuchtungsfeld und die zweite UV-Lampe ein zweites Beleuchtungsfeld erzeugt, und wenn der erste und der zweite Reflektor derart ausgelegt sind, dass sich das erste und das zweite Beleuchtungsfeld nicht überlappen. Hierdurch wird eine einfache Einstellung einer homogenen Bestrahlung ermöglicht, da das erste und das zweite Beleuchtungsfeld unabhängig voneinander einstellbar und optimierbar sind.

Bei einer vorteilhaften Ausgestaltung der erfindungsgemäßen Vorrichtung weist die erste UV-Lampe einen ersten Lampenkolben und die zweite UV-Lampe einen zweiten Lampenkolben auf, wobei der erste Reflektor auf den ersten Lampenkolben aufgebracht ist, und/oder der zweite Reflektor auf den zweiten Lampenkolben aufgebracht ist.

Ein auf den Lampenkolben aufgebrachter Reflektor trägt zu einer kompakten Bauform der erfindungsgemäßen Vorrichtung bei, und zwar bei gleicher Effektivität hinsichtlich der Homogenität der Bestrahlungsleistung.

Lampenkolben weisen regelmäßig eine Außenoberfläche und eine Innenoberfläche auf; sie sind in der Regel als Hohlzylinder ausgebildet. Der erste Reflektor kann auf die Außenoberfläche und/oder die Innenoberfläche des ersten Lampenkolbens aufgebracht sein. Ein auf die Außenoberfläche aufgebrachter Reflektor ist einfach zu fertigen. Ein auf die Innenoberfläche aufgebrachter Reflektor verringert Strahlungsverluste, die durch einen Eintritt und die Rückreflexion am Reflektor reflektierter Strahlung durch den Hohlzylinder des Lampenkolbens bedingt sind. Vorzugsweise ist der zweite Reflektor ebenfalls auf die Außenoberfläche und/oder die Innenoberfläche des zweiten Lampenkolbens aufgebracht.

In diesem Zusammenhang hat es sich bewährt, wenn der erste Lampenkolben eine kreisförmige Querschnittsform mit einem Mittelpunkt aufweist, und wenn der erste Reflektor ein gebogener Reflektorstreifen ist, der einen Kreisbogen des ersten Lampenkolbens mit einem Mittelpunktswinkel im Bereich von 120° bis 225° bedeckt.

Der Reflektorstreifen bedeckt den Kreisbogen des ersten Lampenkolbens in Richtung einer Längsachse des Lampenkolbens gesehen vollständig oder teilweise. Ein Reflektorstreifen, der einen Kreisbogen mit oben genanntem Mittelpunktswinkel bedeckt, weist einen Reflektorwinkel im Bereich von 135° bis 240° auf. Ein solcher Reflektor ist geeignet die von der ersten UV-Lampe emittierte UVStrahlung in Richtung des ersten gekrümmten Abschnitts zu fokussieren. Je größer der Mittelpunktswinkel, desto stärker fokussiert ist die Abstrahlung. Bei einem Mittelpunktswinkel von weniger als 120° verliert sich der Effekt der fokussierenden Abstrahlung. Ein Mittelpunktswinkel von mehr als 225° geht mit einer hohen Fokussierung und einer Bestrahlung eines kleinen Bereichs des Querschnitts einher.

Es hat sich bewährt, wenn der zweite Lampenkolben eine kreisförmige Querschnittsform mit einem Mittelpunkt aufweist, und wenn der zweite Reflektor ein gebogener Reflektorstreifen ist, der einen Kreisbogen des zweiten Lampenkolbens mit einem Mittelpunktswinkel im Bereich von 180° bis 315°, vorzugsweise von 250° bis 315°, bedeckt.

Der Mittelpunktswinkelbereich entspricht einem Reflektorwinkel in einem Bereich von 45° bis 180°. Ein solcher Bereich trägt zu einer guten Fokussierung der von der zweiten UV-Lampe emittierten Strahlung bei. Der kürzeste Abstand der ersten UV-Lampe zur Innenwandung ist geringer als der kürzeste Abstand der zweiten UV-Lampe zur Innenwandung. Ein Mittelpunktswinkel des zweiten Reflektorstreifens im oben genannten Bereich trägt dem größeren kürzesten Abstand der zweiten Lampe zur Innenwandung des Kanals Rechnung.

Vorteilhafterweise ist der erste Reflektor und/oder der zweite Reflektor ein diffus streuender Reflektor.

Diffus streuende Reflektoren reflektieren auf sie auftreffendes Licht in verschiedene Richtungen, so dass Streulicht erhalten wird. Streulicht ist insbesondere für eine Erzeugung gleichmäßiger Bestrahlungsintensitäten geeignet, da auftretende Maxima der Bestrahlungsstärke abgeschwächt werden, so dass Unterschiede der Bestrahlungsstärke verringert werden. Alternativ können der erste Reflektor und/oder der zweite Reflektor eine spiegelnde Oberfläche aufweisen. Dabei hat es sich bewährt, der erste und/oder der zweite Reflektor ein asymmetrischer Reflektor ist. Ein asymmetrischer Reflektor erzeugt ein asymmetrisches Beleuchtungsfeld; er ist insbesondere zur Erzeugung eines ovalen Beleuchtungsfelds geeignet.

Es hat sich als günstig erwiesen, wenn der erste Reflektor und/oder der zweite Reflektor aus opakem Quarzglas oder aus Keramik gefertigt ist.

Ein Reflektor aus opakem Quarzglas oder aus Keramik wirkt diffus reflektierend. Bei der Reflexion an einem solchen Reflektor treten nur geringe Strahlungsverluste auf. Er ist darüber hinaus einfach und kostengünstig zu fertigen. Vorzugsweise ist der erste und/oder der zweite Reflektor eine auf den jeweiligen Lampenkolben aufgebrachte Beschichtung aus opakem Quarzglas.

Bei einer weiteren, bevorzugten Ausgestaltung der erfindungsgemäßen Vorrichtung ist vorgesehen, dass die erste UV-Lampe, die zweite UV-Lampe und die mindestens eine dritte UV-Lampe jeweils eine Mittelachse aufweisen, und in der Führungseinheit in einer Reihe hintereinander angeordnet sind, wobei ihre Mittelachsen parallel zueinander verlaufen.

Nachfolgend wird die Erfindung anhand eines Ausführungsbeispiels und Zeichnungen näher beschrieben. Im Einzelnen zeigt in schematischer Darstellung:
- **Figur 1**: eine erste Ausführungsform einer erfindungsgemäßen Vorrichtung im Querschnitt, bei der in einer Querschnittsebene vier UV-Lampen angeordnet sind,
- **Figur 2**: eine zweite Ausführungsform einer erfindungsgemäßen Vorrichtung im Querschnitt, mit drei in einer Querschnittsebene angeordneten UV-Lampen,
- **Figur 3**: eine dritte Ausführungsform einer erfindungsgemäßen Vorrichtung im Querschnitt, bei der in einer Querschnittsebene vier UV-Lampen mit einem auf dem Lampenkolben aufgebrachten Reflektor angeordnet sind, und
- **Figur 4**: eine Anordnung einer vierten Ausführungsform der erfindungsgemäßen Vorrichtung in einem Kanal in perspektivischer Ansicht, bei der die UV-Lampen in Längsrichtung des Kanals gesehen hintereinander angeordnet sind.

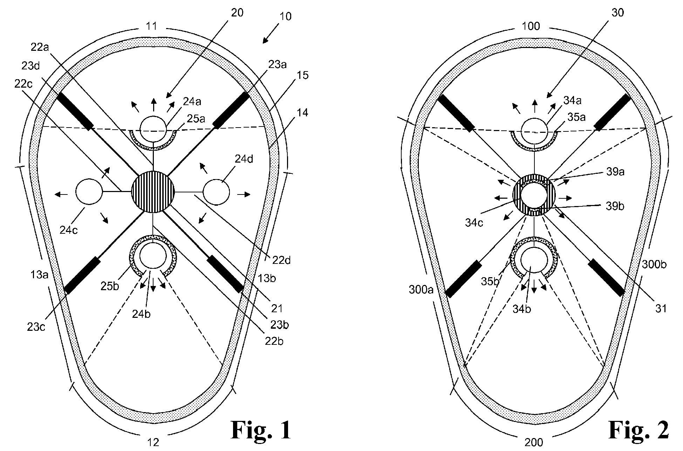

**Figur 1** zeigt in einer Querschnittsdarstellung einen Kanal 10, in dem eine erste Ausführungsform einer erfindungsgemäßen Vorrichtung zum Aushärten von Kunststofflinern auf einer Innenwandung eines Kanals 10 angeordnet ist. Der Vorrichtung ist insgesamt die Bezugsziffer 20 zugeordnet.

Der Kanal 10 hat einen eiförmigen Querschnitt mit vier Abschnitten, nämlich einem ersten gekrümmten Abschnitt 11, einem zweiten gekrümmten Abschnitt 12 und zwei Seitenabschnitte 13a, 13b. Er weist eine Innenwandung 14 und eine Außenwandung 15 auf. Auf die Innenwandung ist eine Beschichtung aus opakem Quarzglas (beispielsweise QRC^{®}, Heraeus) (nicht dargestellt) aufgebracht.

Um die Beschichtung auszuhärten, wird die Vorrichtung 20 mit einer Transportvorrichtung (nicht dargestellt) durch den Kanal gezogen. Um eine möglichst gleichmäßige Bestrahlung der Beschichtung zu gewährleisten, weist die Vorrichtung 20 eine Führungseinheit 21 auf. Die Führungseinheit 21 ist mit Aufnahmen 22a, 22b, 22c, 22d für UV-Lampen versehen; sie legt die Position der UV-Lampen in Bezug auf den ovalen Querschnitt des Kanals fest.

Die Vorrichtung 20 ist modular aufgebaut und umfasst mehrere hintereinander angeordnete Module. Figur 1 zeigt lediglich einen Querschnitt eines Moduls der Vorrichtung 20. Die anderen Module (nicht dargestellt) sind identisch ausgebildet.

In der in Figur 1 dargestellten Querschnittsebene sind vier UV-Lampen 24a, 24b, 24c, 24d angeordnet. Die UV-Lampen 24a, 24b, 24c, 24d sind baugleiche Quecksilbermitteldruckstrahler mit einem zylinderförmigen Lampenrohr aus Quarzglas. Das Lampenrohr jedes der UV-Lampen 24a, 24b, 24c, 24c hat einen Durchmesser von 45 mm und eine Länge von 150 mm; sie weisen jeweils eine Nennleistung von 1.000 W auf.

Durch die Führungseinheit 21 ist die Position der UV-Lampen 24a, 24b, 24c, 24d in Bezug auf den Kanal-Querschnitt festgelegt. Die erste UV-Lampe 24a ist dem gekrümmten Abschnitt 11 des Kanals 2 zugeordnet. Zwischen der Führungseinheit 21 und der UV-Lampe 24a ist ein Reflektor 25a angeordnet, der das von der ersten UV-Lampe 24a emittierte Licht bündelt und auf den ersten gekrümmten Abschnitt 11 des Kanals 10 reflektiert. Der Reflektor 25a ist ein separates Bauteil aus gehämmertem Aluminium. Die erste UV-Lampe 24a weist einen kürzesten Abstand von dem ersten gekrümmten Abschnitt von 150 mm auf.

Auch der zweiten UV-Lampe 24b ist ein separater Reflektor 25b aus gehämmertem Aluminium zugeordnet. Der Reflektor umgibt die UV-Lampe 24b derart, dass ein Reflektorwinkel von 80° erreicht wird. Der Reflektor bedeckt mithin den einen Kreisbogen des Lampenkolbens der UV-Lampe 24b von 280°. Der kürzeste Abstand zwischen der zweiten UV-Lampe 24b und dem zweiten gekrümmten Abschnitt 12 des Kanals 10 beträgt 300 mm. Durch den geringen Reflektorwinkel des Reflektors 25b wird das von der UV-Lampe 24b emittierte Licht auf den zweiten gekrümmten Abschnitt 12 des Kanals 10 fokussiert und der Reflektor 25b trägt so zu einer erhöhten Bestrahlungsleistung in diesem Abschnitt bei.

Den UV-Lampen 24c, 24d ist kein Reflektor zugeordnet, so dass sie grundsätzlich in alle Raumrichtungen Strahlung emittieren. Sie sind vornehmlich zur Bestrahlung der Seitenabschnitte 13a, 13b des Kanals vorgesehen.

Darüber hinaus ist die Führungseinheit 21 mit Rollen 23a, 23b, 23c, 23d versehen, die eine einfache Bewegung der Führungseinheit 21 durch den Kanal 10 ermöglichen sollen.

**Figur 2** zeigt eine zweite Ausführungsform der erfindungsgemäßen Vorrichtung, der insgesamt die Bezugsziffer 30 zugeordnet ist. Die Vorrichtung 30 ist in einem Kanal angeordnet wie zu Figur 1 beschrieben.

Die Vorrichtung 30 umfasst eine Führungseinheit 31, sowie eine erste UV-Lampe 34a, eine zweite UV-Lampe 34b und eine dritte UV-Lampe 34c.

Die Führungseinheit 31 unterscheidet sich von der Führungseinheit 21 aus Figur 1 darin, dass die Aufnahme für die dritten UV-Lampe 34c im Zentrum der Führungseinheit 31 angeordnet ist.

Die erste UV-Lampe 34a und die zweite UV-Lampe 34b entsprechen der ersten UV-Lampe 24a beziehungswiese der zweiten UV-Lampe 24b aus Figur 1. Dies trifft auch für den der ersten UV-Lampe und den der zweiten UV-Lampe zugeordneten Reflektor zu.

Die dritte UV-Lampe 34c ist derart angeordnet, dass sie die beiden Seitenabschnitte des Kanals gleichmäßig bestrahlt. Die dritte UV-Lampe 34c ist mit zwei Zusatzreflektoren 39a, 39b versehen, die unmittelbar auf einen Lampenkolben der dritten UV-Lampe 34c in Form einer Beschichtung aus opakem Quarzglas aufgebracht sind. Der Zusatzreflektor 39a verhindert eine Abstrahlung von ultravioletter Strahlung in Richtung der ersten UV-Lampe 34a. Der zweite Zusatzreflektor 39b verhindert eine Abstrahlung in Richtung der zweiten UV-Lampe 34b. Die Reflektoren 35a, 35b und die Zusatzreflektoren 39a, 39b sind derart angeordnet, dass die erste UV-Lampe 34a einen erstes Beleuchtungsfeld 100 des Kanals bestrahlt, und dass die zweite UV-Lampe 34b einen zweiten Beleuchtungsfeld 200 des Kanals bestahlt. Die dritte UV-Lampe 34c bestrahlt jeweils ein Beleuchtungsfeld auf den beiden Seitenabschnitte 300a, 300b des Kanals. Dabei sind die Reflektoren derart angeordnet, dass sich die von den UV-Lampen 34a, 34b, 34c bestrahlten Beleuchtungsfelder nicht überlappen. Hierdurch wird eine einfache Einstellung der Bestrahlungsstärke auf der Innenwandung ermöglicht, da Überlappungsbereiche unberücksichtigt bleiben können.

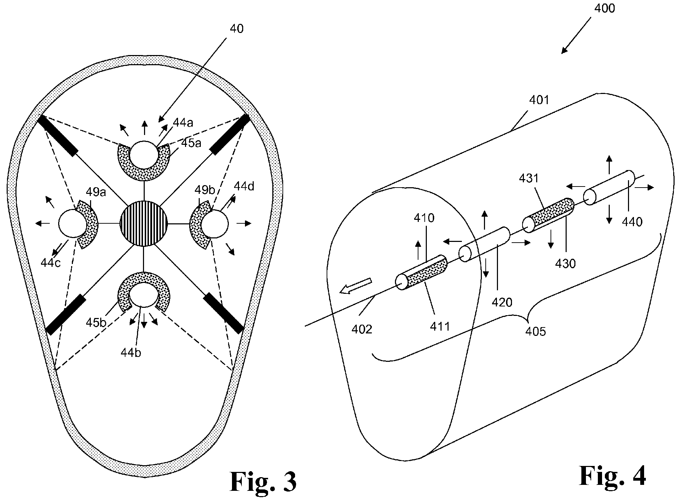

**Figur 3** zeigt eine dritte Ausführungsform der erfindungsgemäßen Vorrichtung 40, die sich von der Vorrichtung aus Figur 1 im Wesentlichen darin unterscheidet, dass die jeweiligen Reflektoren 45a, 45b, 49a, 49b unmittelbar auf den jeweiligen Lampenkolben der UV-Lampen 44a, 44b, 44c, 44d aufgebracht sind. Darüber hinaus unterscheiden sich die Reflektorwinkel der Reflektoren 45a, 45b, 49a, 49b.

Die Reflektoren sind aus opakem Quarzglas gefertigt. Die Reflektorwinkel (Mittelpunktswinkel) betragen:

| | |
|---|---|
| Reflektor 44a: | 135° (225°) |
| Reflektor 45b: | 110° (250°) |
| Reflektoren 49a, b: | 225° (135°) |

**Figur 4** zeigt eine alternative Ausführungsform der erfindungsgemäßen Vorrichtung der insgesamt die Bezugsziffer 400 zugeordnet ist. Die Vorrichtung 400 ist zur besseren Übersicht in einem Kanal 401 mit ovaler Querschnittsform angeordnet.

Die Vorrichtung 400 umfasst eine Führungseinheit mit mehreren Laufeinheiten, wobei in Figur 4 beispielhaft nur eine Laufeinheit schematisch dargestellt ist. Die Laufeinheit 405 umfasst vier baugleiche UV-Lampen 410, 420, 430, 440, die in Längsrichtung 402 des Kanals 401 gesehen hintereinander angeordnet sind. Die UV-Lampen 410, 420, 430, 440 unterscheiden sich darin, dass sie teilweise mit einem Reflektor versehen sind, der einen Reflektorwinkel (Abstrahlwinkel) für die von ihnen emittierte Strahlung festlegt.

Die UV-Lampe 410 ist mit einem Reflektor 411 aus opakem Quarzglas versehen. Die Haupt-Abstrahlrichtung ist durch einen Pfeil gekennzeichnet.

Die UV-Lampen 420, 440 sind identisch ausgebildet; sie weisen keinen Reflektor auf und strahlen somit in alle Raumrichtungen ab (dargestellt durch vier Pfeile).

Die UV-Lampe 430 ist ebenfalls mit einem Reflektor versehen. Sie ist identisch zur UV-Lampe 410 ausgebildet, mit dem Unterschied, dass in der Vorrichtung 400 eine andere Ausrichtung einnimmt. Die Haupt-Abstrahlrichtung der UV-Lampe 430 verläuft entgegengesetzt zur Haupt-Abstrahlrichtung der UV-Lampe 410; sie ist ebenfalls durch einen Pfeil dargestellt.

## Patentansprüche

1. Vorrichtung (20; 30; 40;400) zum Aushärten einer Beschichtung auf einer Innenwandung eines Kanals (10; 401) mit ovalem Querschnitt, der einen ersten gekrümmten Abschnitt (11), einen dem ersten gekrümmten Abschnitt (11) gegenüberliegenden, zweiten Abschnitt (12) und zwei Seitenabschnitte (13a; 13b) umfasst, aufweisend mindestens zwei UV-Lampen (24a; 24b; 34a; 34b; 44a; 44b; 410; 430), nämlich eine erste UV-Lampe (24a; 34a; 44a; 410), und eine zweite UV-Lampe (24b; 34b; 44b; 430), sowie eine Führungseinheit (21; 31) mit einer Aufnahme (22a; 22b) für jede der UV-Lampen, wobei die Führungseinheit (21; 31) die Position der UV-Lampen (24a; 24b; 34a; 34b; 44a; 44b; 410; 430) in Bezug auf den ovalen Querschnitt des Kanals (10) festlegt, **dadurch gekennzeichnet, dass** der ersten UV-Lampe (24a; 34a; 44a; 410) ein erster Reflektor (25a; 35a; 45a; 411) zur Führung des von der ersten UV-Lampe (24a; 34a; 44a; 410) emittierten Lichts auf den ersten gekrümmten Abschnitt (11) zugeordnet ist, und der zweiten UV-Lampe (24b; 34b; 44b; 430) ein zweiter Reflektor (25b; 35b; 45b; 431) zur Führung des von der zweiten UV-Lampe (24b; 34b; 44b; 430) emittieren Lichts auf den zweiten gekrümmten Abschnitt (12) zugeordnet ist, wobei sich der erste Reflektor (25a; 35a; 45a; 411) und der zweite Reflektor (25b; 35b; 45b; 431) in ihrem Reflektorwinkel und/oder in ihrem Reflexionsgrad unterscheiden.

2. Vorrichtung (20; 30; 40; 400) nach Anspruch 1, **dadurch gekennzeichnet, dass** sie mindestens eine dritte UV-Lampe (24c; 24d; 34c; 44c; 44d; 420; 440) aufweist, wobei die mindestens eine dritte UV-Lampe (24c; 24d; 34c; 44c; 44d; 420; 440) zur Bestrahlung mindestens eines der Seitenabschnitte (13a; 13b) ausgelegt ist.

3. Vorrichtung (20; 30; 40;400) nach Anspruch 2, **dadurch gekennzeichnet, dass** die dritte UV-Lampe (24c; 34c; 44c; 420) zur Bestrahlung eines der Seitenabschnitte (13a; 13b) ausgelegt ist, und dass die Vorrichtung eine vierte UV-Lampe (24d; 44d; 440) umfasst, die zur Bestrahlung des anderen Seitenabschnitts (13a; 13b) ausgelegt ist.

4. Vorrichtung (20; 30; 40;400) nach einem der vorhergehenden Ansprüche, **dadurch gekennzeichnet, dass** der erste Reflektor (25a; 35a; 45a; 411) und/oder der zweite Reflektor (25b; 35b; 45b; 431) derart ausgelegt ist, dass er ein ovales Beleuchtungsfeld erzeugt.

5. Vorrichtung (20; 30; 40;400) nach einem der vorhergehenden Ansprüche, **dadurch gekennzeichnet, dass** die erste UV-Lampe (24a; 34a; 44a; 410) einen ersten Lampenkolben und die zweite UV-Lampe (24b; 34b; 44b; 430) einen zweiten Lampenkolben aufweist, und dass der erste Reflektor (25a; 35a; 45a; 411) auf den ersten Lampenkolben aufgebracht ist, und/oder der zweite Reflektor (25b; 35b; 45b; 431) auf den zweiten Lampenkolben aufgebracht ist.

6. Vorrichtung (20; 30; 40;400) nach Anspruch 5, **dadurch gekennzeichnet, dass** der erste Lampenkolben eine kreisförmige Querschnittsform mit einem Mittelpunkt aufweist, und dass der erste Reflektor (25a; 35a; 45a; 411) ein gebogener Reflektorstreifen ist, der einen Kreisbogen des ersten Lampenkolbens mit einem Mittelpunktswinkel im Bereich von 120° bis 225° bedeckt.

7. Vorrichtung (20; 30; 40;400) nach einem der vorhergehenden Ansprüche 5 oder 6, **dadurch gekennzeichnet, dass** der zweite Lampenkolben eine kreisförmige Querschnittsform mit einem Mittelpunkt aufweist, und dass der zweite Reflektor (25b; 35b; 45b; 431) ein gebogener Reflektorstreifen ist, der einen Kreisbogen des zweiten Lampenkolbens mit einem Mittelpunktswinkel im Bereich von 180° bis 315°, vorzugsweise von 250° bis 315°, bedeckt.

8. Vorrichtung (20; 30; 40;400) nach einem der vorhergehenden Ansprüche, **dadurch gekennzeichnet, dass** der erste Reflektor (25a; 35a; 45a; 411) und/oder der zweite Reflektor (25b; 35b; 45b; 431) ein diffus streuender Reflektor ist.

9. Vorrichtung (20; 30; 40;400) nach einem der vorhergehenden Ansprüche, **dadurch gekennzeichnet, dass** der erste Reflektor (25a; 35a; 45a; 411) und/oder der zweite Reflektor (25b; 35b; 45b; 431) aus opakem Quarzglas oder aus Keramik gefertigt ist.

10. Vorrichtung (20; 30; 40;400) nach einem der vorhergehenden Ansprüche 2 bis 9, **dadurch gekennzeichnet, dass** die erste UV-Lampe (24a; 34a; 44a; 410), die zweite UV-Lampe (24b; 34b; 44b; 430) und die mindestens eine dritte UV-Lampe (24c; 24d; 34c; 44c; 44d; 420; 440) jeweils eine Mittelachse aufweisen, und in der Führungseinheit (21; 31) in einer Reihe hintereinander angeordnet sind, wobei ihre Mittelachsen parallel zueinander verlaufen.
